# EUROPEAN PATENT SPECIFICATION

(11) **EP 3 842 311 B1**
(45) Date of publication and mention of the grant of the patent: **23.04.2025**
(21) Application number: 19895456.2
(22) Date of filing: 25.10.2019
(51) Int. Cl.: B61L 15/00, B61L 27/30

(54) **LOCOMOTIVE DRIVING MODE SWITCHING METHOD, APPARATUS, AND MEDIUM**
VERFAHREN, VORRICHTUNG UND MEDIUM ZUM UMSCHALTEN EINES LOKOMOTIVENANTRIEBSMODUS
PROCÉDÉ DE COMMUTATION DE MODE DE CONDUITE DE LOCOMOTIVE, APPAREIL ET SUPPORT

(30) Priority: 14.12.2018 CN 201811534386
(43) Date of publication of application: 30.06.2021
(73) Proprietor: Zhuzhou CRRC Times Electric Co., Ltd., Zhuzhou, Hunan 412001 (CN)
(72) Inventor: LIU, Yexuan, Zhuzhou, Hunan 412001 (CN); ZHOU, Wenwei, Zhuzhou, Hunan 412001 (CN); LI, Tiebing, Zhuzhou, Hunan 412001 (CN); LI, Kai, Zhuzhou, Hunan 412001 (CN)
(74) Representative: Frick, Robert
(86) International application number: PCT/CN2019/113181
(87) International publication number: WO 2020/119281

(56) References cited:
- EP-A1- 3 333 006
- WO-A1-2017/162406
- WO-A1-2021/009132
- CN-A- 103 863 364
- CN-A- 107 215 343
- CN-A- 107 745 729
- CN-A- 107 977 000
- CN-A- 107 977 000
- US-A1- 2017 253 228

## Description

The present application claims the priority to Chinese Patent Application No.201811534386.9, titled "LOCOMOTIVE DRIVING MODE SWITCHING METHOD, APPARATUS, AND MEDIUM", filed on December 14, 2018 with the National Intellectual Property Administration, PRC.

### FIELD

The present disclosure relates to the technical field of automatic train operation of trains, and in particular to a method and an apparatus for switching an operation mode of a train, and a computer readable storage medium.

### BACKGROUND

In the field of trains, the automatic operation technology is not widely used, and there are no mature and standardized products for automatic operation. The current railway trains cannot operate automatically without supervision of the driver due to the limitations of basic devices and operation environments, and still need to be operated by the driver in some special or difficult situations. Therefore, in actual applications of automatic operation of the railway trains, the switching between an automatic operation mode and a manual operation mode is inevitable.

However, solutions for switching between the manual operation mode and the automatic operation mode have not been developed for trains. If the operation mode of the train is improperly switched by the driver based on experience, the train may be out of control due to loss of suitable operation commands, or may be subject to a great impulse force due to a sudden change in the working condition caused by switching of the operation mode, or the train cannot operate normally since the automatic operation mode, to which the train has been switched, is unavailable, resulting in low reliability and safety of switching the operation mode of the train.
CN107977000A discloses an automatic driving system for locomotive. The system includes a signal information collection module, a man-machine interaction module, and a train ATO system. The signal information collection module collects locomotive information required for automatic driving of the railway locomotive, transmit the locomotive information to the train ATO system and send the locomotive information through the man-machine interaction module to a train driver for monitoring and control. The train ATO system obtains an optimal control gear sequence for locomotive control based on the locomotive information sent by the signal information collection module, and sends a locomotive control manipulation instruction sequence to the man-machine interaction module, and the man-machine interaction module notifies the train driver to perform safe switching between manual and automatic operation according to the locomotive control manipulation instruction sequence. The train ATO system receives the train driver's instruction through the man-machine interaction module and performs setting of a manual/automatic switch according to the instruction.
WO2017162406A1 discloses a method for retrofitting a rail vehicle for an autonomous driving operation. In order to be able to carry out the retrofitting as cost effectively as possible, an ATO device is integrated for autonomously driving the rail vehicle, an old input or output means designed for a manual driving operation is exchanged for a new input or output means that is substantially structurally identical to the old input or output means, and the new input or output means is connected to the ATO device.

Therefore, how to improve the reliability and safety when switching the operation mode of the train is an urgent problem to be solved by those skilled in the art.

### SUMMARY

A method and an apparatus for switching an operation mode of a train, and a computer readable storage medium are provided according to the embodiments of the present disclosure to improve the reliability and safety of switching the operation mode of the train.

To solve the above technical problems, the present invention provides a method for switching an operation mode of a train according to claim 1. The method is applied to an automatic train operation device on the train, and the method includes:
determining whether state information of the automatic train operation device indicates that an automatic operation mode is allowed, and whether state information of each of control devices indicates that the automatic operation mode is allowed, where the state information of the automatic train operation device is determined by the automatic train operation device based on an automatic operation condition set for the automatic train operation device, and for each of the control devices, the state information of the control device is determined by the control device based on an automatic operation condition set for the control device and is sent to the automatic train operation device, and the state information indicates an operation mode that the control device or the automatic train operation device is allowed to enter;
presenting, if the state information of the automatic train operation device indicates that the automatic operation mode is allowed, and the state information of each of control devices indicates that the automatic operation mode is allowed, information for prompting activating the automatic operation mode;
sending, on reception of an automatic operation activation command meeting a safety rule, an automatic operation activation instruction to each of the control devices; and
switching, on reception of response messages from all of the control devices for acknowledging activation of automatic operation, an operation mode of the automatic train operation device to the automatic operation mode.

In an embodiment, after switching the operation mode of the automatic train operation device to the automatic operation mode, the method further includes:
presenting information for prompting that the train has entered the automatic operation mode.

In an embodiment, after sending an automatic operation activation instruction to each of the control devices, the method further includes:
determining whether the response messages from all of the control devices for acknowledging activation of automatic operation are received within a predetermined time period; and
stopping sending the automatic operation activation instruction to each of the control devices, presenting information for prompting failed activation of automatic operation, and returning to the step of determining whether state information of the automatic train operation device indicates that an automatic operation mode is allowed, and whether state information of each of control devices indicates that the automatic operation is allowed, if not all of the response messages from the control devices for acknowledging activation of automatic operation is received within the predetermined time period.

In an embodiment, after sending the automatic operation activation instruction to each of the control devices, the method further includes:
on reception of information for prompting exiting the automatic operation mode from a target control device, presenting information for prompting that the train exits the automatic operation mode, switching the operation mode of the automatic train operation device to a manual operation mode, and sending an automatic operation mode exiting instruction to each of other control devices, to cause each of the other control devices to switch the operation mode of the control device to the manual operation mode, wherein the target control device is any one of the control devices, and the other control devices are remaining control devices other than the target control device among the control devices.

In an embodiment, after switching an operation mode of the automatic train operation device to the automatic operation mode, the method further includes:
if it is detected that the state information of the automatic train operation device indicates that the automatic operation mode is not allowed, presenting information for prompting that the automatic operation mode is exited, switching the operation mode of the automatic train operation device to a manual operation mode, and sending an automatic operation mode exiting instruction to each of the control devices, to cause each of the control devices to switch the operation mode of the control device to the manual operation mode.

In an embodiment, after sending the automatic operation activation instruction to each of the control devices and switching the operation mode of the automatic train operation device to the automatic operation mode, the method further includes:
determining, on reception of an automatic operation exiting command, whether a current operation state of the train meets a switching condition;
switching the operation mode of the automatic train operation device to a manual operation mode and sending an automatic operation mode exiting instruction to each of the control devices if the current operation state of the train meets the switching condition, to cause each of the control devices to switch the operation mode of the control device to the manual operation mode; and
presenting, if the current operation state of the train does not meet the switching condition, information for prompting manual takeover.

An apparatus for switching an operation mode of a train is further provided according to claim 7. The apparatus is applied to an automatic train operation device on the train, and the apparatus includes: a determining unit, a presenting unit, a sending unit, and a switching unit.

The determining unit is configured to determine whether state information of the automatic train operation device indicates that an automatic operation mode is allowed, and whether state information of each of control devices indicates that the automatic operation mode is allowed. The state information of the automatic train operation device is determined by the automatic train operation device based on an automatic operation condition set for the automatic train operation device. For each of the control devices, the state information of the control device is determined by the control device based on an automatic operation condition set for the control device and is sent to the automatic train operation device, and the state information indicates an operation mode that the control device or the automatic train operation device is allowed to enter.

The presenting unit is configured to present, if the state information of the automatic train operation device indicates that the automatic operation mode is allowed, and the state information of each of control devices indicates that the automatic operation mode is allowed, information for prompting activating the automatic operation mode.

The sending unit is configured to send, on reception of an automatic operation activation command meeting a safety rule, an automatic operation activation instruction to each of the control devices.

The switching unit configured to switch, on reception of response messages from all of the control devices for acknowledging activation of automatic operation, an operation mode of the automatic train operation device to the automatic operation mode.

In an embodiment, the presenting unit is further configured to, after the operation mode of the automatic train operation device is switched to the automatic operation mode, present information for prompting that the train has entered the automatic operation mode.

The target control device is any one of the control devices, and the other control devices are remaining control devices other than the target control device among the control devices.

The switching unit is further configured to switch the operation mode of the automatic train operation device to a manual operation mode and trigger the sending unit to send an automatic operation mode exiting instruction to each of the control devices if the current operation state of the train meets the switching condition, to cause each of the control devices to switch the operation mode of the control device to the manual operation mode.

The presenting unit is further configured to present, if the current operation state of the train does not meet the switching condition, information for prompting manual takeover.

A device for switching an operation mode of a train is further provided according to an embodiment of the present disclosure. The device includes a memory and a processor.

The memory is configured to store a computer program.

The processor is configured to execute the computer program to perform steps of the method for switching an operation mode of a train.

A computer readable storage medium, storing a computer program, is provided according to an embodiment of the present disclosure. the computer program, when executed by a processor, performs steps of the method for switching an operation mode of a train.

In the above technical solutions, it is determined whether state information of the automatic train operation device indicates that an automatic operation mode is allowed, and whether state information of each of control devices indicates that the automatic operation mode is allowed, where the state information of the automatic train operation device is determined by the automatic train operation device based on an automatic operation condition set for the automatic train operation device, and for each of the control devices, the state information of the control device is determined by the control device based on an automatic operation condition set for the control device; if the state information of the automatic train operation device indicates that the automatic operation mode is allowed, and the state information of each of control devices indicates that the automatic operation mode is allowed, information for prompting activating the automatic operation mode is presented; on reception of an automatic operation activation command meeting a safety rule, an automatic operation activation instruction is sent to each of the control devices; and on reception of response messages from all of the control devices for acknowledging activation of automatic operation, an operation mode of the automatic train operation device is switched to the automatic operation mode. Thus, the operation mode of the train is switched from the manual operation mode to the automatic operation mode. In the technical solution, conditions are set for switching of the operation modes of the automatic train operation device and the control devices. The operation mode of the train can be switched to the automatic operation mode only in a case that the automatic train operation device meets the automatic operation condition and each of the control devices meets the automatic operation condition, thereby improving the reliability and safety when switching the operation mode of the train.

### BRIEF DESCRIPTION OF THE DRAWINGS

The drawings to be used in the description of the embodiments will be described briefly as follows, so that the technical solutions according to the embodiments of the present disclosure will become clearer. It is apparent that the drawings in the following description only illustrate some embodiments of the present disclosure. For those skilled in the art, other drawings may be obtained according to these drawings without any creative work.
Figure 1 is a flow chart of a method for switching an operation mode of a train according to an embodiment of the present disclosure;
Figure 2a is a schematic diagram showing a scenario in which the automatic operation mode is allowed according to an embodiment of the present disclosure;
Figure 2b is a schematic diagram showing a scenario of activating the automatic operation mode according to an embodiment of the present disclosure;
Figure 2c is a schematic diagram showing a scenario of feeding back activation of the automatic operation mode according to an embodiment of the present disclosure;
Figure 2d is a schematic diagram showing a scenario of exiting the automatic operation mode according to an embodiment of the present disclosure;
Figure 2e is a schematic diagram showing a scenario of feeding back that the automatic operation mode is exited according to an embodiment of the present disclosure;
Figure 3 is a schematic structural diagram of an apparatus for switching an operation mode of a train according to an embodiment of the present disclosure; and
Figure 4 is a schematic diagram of a hardware configuration of a device for switching an operation mode of a train according to an embodiment of the present disclosure.

### DETAILED DESCRIPTION OF EMBODIMENTS

Technical solutions according to embodiments of the present disclosure are described clearly and completely hereinafter in conjunction with drawings used in the embodiments of the present disclosure. Apparently, the described embodiments are only some embodiments of the present disclosure rather than all the embodiments. Any other embodiments obtained by those skilled in the art based on the embodiments of the present disclosure without any creative work fall in the scope of protection of the present disclosure.

In order for those skilled in the art to better understand the solutions according to the present disclosure, the present disclosure is described in detail below in combination with the embodiments with reference to the drawings.

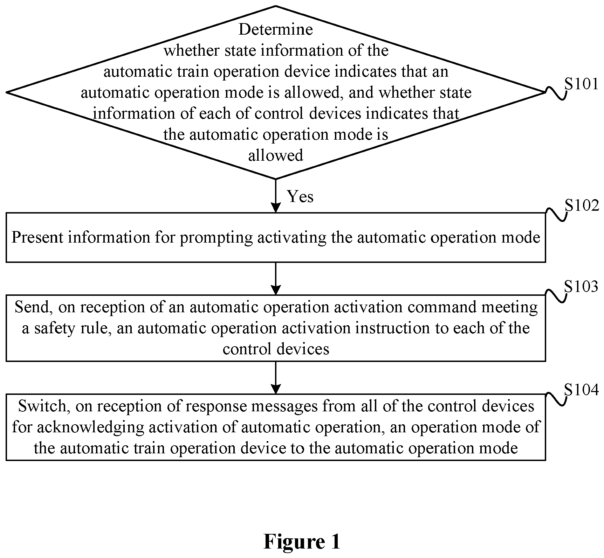

A method for switching an operation mode of a train according to an embodiment of the present disclosure is described in detail as follows. Figure 1 shows a flow chart of a method for switching an operation mode of a train according to an embodiment of the present disclosure. The method is applied to an automatic train operation device on the train. The method includes the following steps S101 to S104.

In step S101, it is determined whether state information of the automatic train operation device indicates that an automatic operation mode is allowed, and whether state information of each of control devices indicates that the automatic operation mode is allowed.

The train has multiple devices that perform respective functions. In the automatic operation mode, automatic operation of the train is achieved through an automatic train operation (ATO) device, various control devices, an on-board signal device (referred to as an LKJ in the present disclosure), and a driver machine interface (DMI). The control devices may include a brake control unit (BCU) and a central control unit (CCU).

The LKJ is configured to provide trip information and route information in the automatic operation mode, so that the ATO device may plan a route based on the trip information and route information.

The DMI includes a display screen and buttons for the driver to interact with the train system. With the DMI, the driver may check the state of the train system, obtain text prompts and voice prompts, and input a control instruction or a query instruction by using the buttons.

The operation mode of the train includes a manual operation mode and an automatic operation mode. In the automatic operation mode, the ATO device may serve as a central manager that interacts with the BCU, the CCU, the LKJ and the DMI. When the train is switched to the automatic operation mode, normal communication between the ATO device, the BCU, the CCU, the LKJ and the DMI are required, and it is further required that each of the ATO device, the BCU and the CCU meets a requirement for operating in the automatic operation mode. Therefore, automatic operation conditions are respectively set for the control devices and the automatic train operation device according to the embodiment of the present disclosure. Only when all of the automatic operation conditions are met, the train is allowed to be switched to the automatic operation mode, thereby ensuring safety and stability when switching the operation mode.

The state information indicates an operation mode that the device is allowed to enter. The state information may indicate that the automatic operation mode is allowed or the automatic operation mode is not allowed. If the state information indicates that the automatic operation mode is not allowed, the train operates in the manual operation mode.

For each of the control devices, the state information of the control device is determined by the control device based on a respective operation condition set for the control device. The state information of the automatic train operation device is determined by the automatic train operation device based on the automatic operation condition set for the automatic train operation device.

The automatic operation condition may be set based on an operation logic and a safety requirement of the train. The automatic operation conditions for respective devices are described in subsequent embodiments, and are not described in detail here.

In step S102, if the state information of the automatic train operation device indicates that the automatic operation mode is allowed, and the state information of each of control devices indicates that the automatic operation mode is allowed, information for prompting activating the automatic operation mode is presented.

In the embodiment of the present disclosure, determination is performed based on the state information of the ATO device, the BCU and the CCU. The default operation mode of each of the ATO device, the BCU and the CCU is the manual operation mode.

The ATO device, serving as the central manager, may receive the state information from the BCU and the state information from the CCU, and may determine the operation mode that the ATO device itself is allowed to enter to obtain the state information of the ATO device itself.

If the state information received by the ATO device and the state information of the ATO device itself all indicate that the automatic operation mode is allowed, the train is suitable for operating in the automatic operation mode. In this case, the ATO device may send an automatic operation allowed instruction to the DMI. The DMI presents information for prompting activating the automatic operation mode on the display screen in response to the automatic operation allowed instruction.

In step S103, if an automatic operation activation command meeting a safety rule is received, an automatic operation activation instruction is sent to each of the control devices.

In practices, the driver may determine whether to activate the automatic operation mode by using buttons on the DMI. In an embodiment of the present disclosure, to avoid a misoperation, a safety rule may be configured to limit time when the buttons are pressed and a sequence in which the buttons are pressed to avoid a misoperation to the greatest extent.

For example, the DMI may present the information for prompting activating the automatic operation mode on the display screen, and provide buttons for applying activating the automatic operation mode. If the driver successively presses an "Activate" button and a "Confirm" button located at determined positions on the DMI in sequence, the ATO device determines that the received automatic operation activation command meets the safety rule. If the driver presses the buttons before the automatic operation conditions of the system are met or the driver does not press the buttons in a predetermined sequence, the ATO device determines that the driver performs a misoperation, and does not activate the automatic operation mode.

The ATO device, on reception of an automatic operation activation command which meets the safety rule, may send an automatic operation activation instruction to each of the control devices.

In step S104, the automatic train operation device switches the operation mode of the automatic train operation device itself to the automatic operation mode, on reception of response messages from all of the control devices for acknowledging activation of automatic operation.

For each of the control devices, after the control device switches the operation mode of the control device to the automatic operation mode, the control device feeds back the response message for acknowledging activation of automatic operation to the ATO device. On reception of the response messages from all of the control devices, the ATO device may switch the operation mode of the ATO device itself to the automatic operation mode, so as to switch the operation mode of the train to the automatic operation mode. In this case, the train operates in the automatic operation mode.

The control devices and the automatic train operation device in the step S101 have respective automatic operation conditions.

The automatic operation condition set for the BCU may include the following conditions: the BCU is in an engagement state, an automatic braking handle is at an operation position, an independent braking handle is at an operation position, an emergency braking state is not triggered, a penalty braking state is not triggered, and the BCU communicates with the ATO device normally. If all the above conditions are met, the state information determined by the BCU indicates the automatic operation mode is allowed. If any one of the above conditions is not met, the state information determined by the BCU indicates that the automatic operation mode is not allowed, thus the train still operates in the manual operation mode by default.

The BCU being in the engagement state indicates that, in a case that the operation mode is switched to the automatic operation mode, the BCU may automatically perform the braking operation, thereby ensuring the safety when switching the operation mode of the train.

The braking handle being at the operation position indicates that the braking handle is at a position required in the automatic operation mode. If the braking handle is manually switched from the operation position to a braking position, the train exits the automatic operation mode since the manual braking operation has higher priority by default in the train system. The braking handle includes the automatic braking handle and the independent braking handle. When any one of the two braking handles is switched from the operation position to the braking region, the train exits the automatic operation mode.

The automatic operation condition set for the CCU may include the following conditions: the train is under control of the driver, a main brake of the train is closed, no parking braking is applied to the train, a traction system of the train has no fault, a network control system of the train has no fault, a compressor of the train is available, the train moves forward, a traction handle is at a position required in the automatic operation mode, and the CCU communicates with the ATO device normally. If all the above conditions are met, the state information determined by the CCU indicates that the automatic operation mode is allowed. If any one of the above conditions is not met, the state information determined by the CCU indicates that the automatic operation mode is not allowed, thus the train still operates in the manual operation mode by default.

The traction handle being at the position required in the automatic operation mode indicates that the traction handle is at a position which indicates there is no manual traction command or dynamic brake command. To avoid mioperations, it's required to manually unlock an interlock so that the traction handle can be moved away from the position required in the automatic operation mode If the traction handle is moved from the position required in the automatic operation mode to a traction region or a brake region, which indicates that manual operation is performed, the train exits the automatic operation mode since the manual operation has higher priority by default in the train system.

The automatic operation condition set for the ATO device may include the following conditions: the ATO device communicates with the BCU, the CCU and the LKJ normally; the ATO device obtains trip information and route information from the LKJ normally; the BCU allows the automatic operation mode; and the CCU allows the automatic operation mode. If all the above conditions are met, the state information determined by the ATO device indicates that the automatic operation mode is allowed. If any one of the conditions is not met, the state information determined by the ATO device indicates that the automatic operation mode is not allowed, thus the train still operates in the manual operation mode by default.

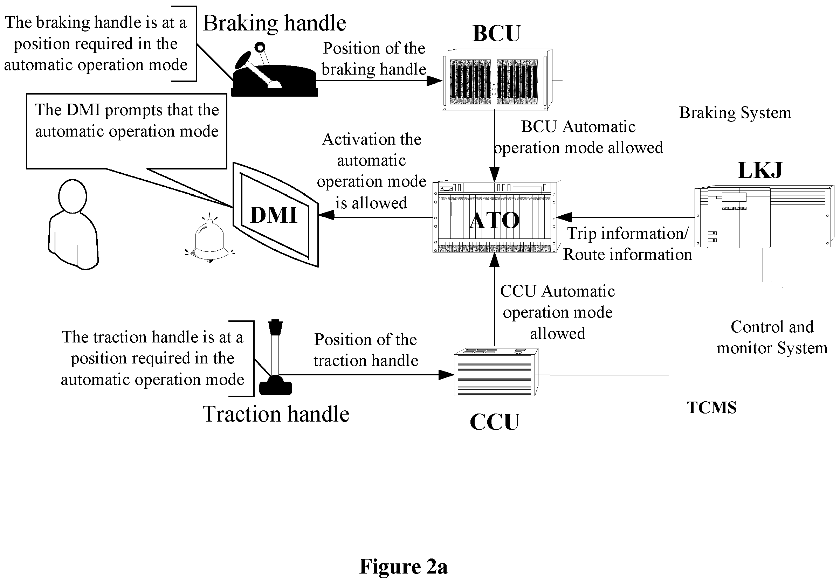

If the state information of each of the BCU, the CCU, and the ATO device indicates that the automatic operation mode is allowed, the train may enter the automatic operation mode. Reference is made to Figure 2a, which is a schematic diagram showing a scenario in which the automatic operation mode is allowed. The CCU transmits the state information indicating that the automatic operation mode is allowed if the automatic operation condition for the CCU is met. The BCU transmits the state information indicating that the automatic operation mode is allowed to the ATO device if the automatic operation condition for the BCU is met. The ATO device performs determination based on the received state information from the CCU and the BCU and the state information of the ATO device itself. The ATO device may send an automatic operation allowed instruction to the DMI if the received state information all indicates that the automatic operation mode is allowed. The DMI presents information for prompting activating the automatic operation mode on the display screen. To attract the attention of the driver, a ringing prompt or a voice prompt may be provided while presenting the information for prompting, so that the driver notices the information for prompting presented on the display screen in time.

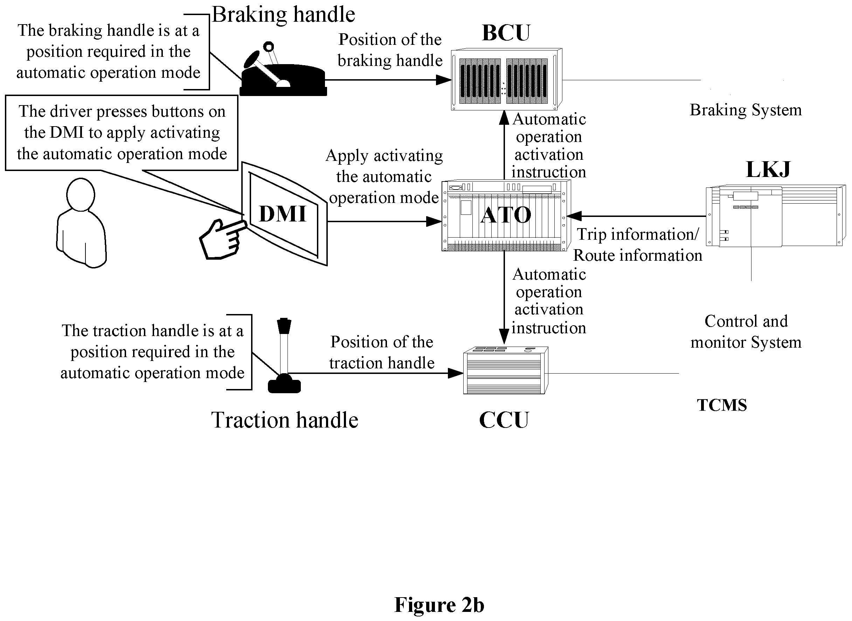

If the train is allowed to enter the automatic operation mode, the driver may press buttons arranged on the DMI to apply activating the automatic operation mode. Reference is made to Figure 2b, which is a schematic diagram showing a scenario of activating the automatic operation mode. The DMI may transmit a received automatic operation activation command to the ATO device. After determining that the automatic operation activation command meets a safety rule, the ATO device sends an automatic operation activation instruction to each of the CCU and the BCU, to cause the CCU and the BCU to switch their respective operation modes to the automatic operation mode. In the automatic operation mode, the LKJ transmits the trip information and the route information to the ATO device, so that the ATO device plans a trip for automatic train operation.

On reception of the automatic operation activation instruction from the ATO device, each of the control devices may switch the operation mode of the control device to the automatic operation mode and feedback a response message for acknowledging activation of automatic operation to the ATO device. On reception of the response messages from respective control devices for acknowledging activation of automatic operation, the ATO device switches the operation mode of the ATO device itself to the automatic operation mode, thus the train enters the automatic operation mode.

After the train enters the automatic operation mode, in order that the driver is informed in time that the automatic operation mode has been activated, the ATO device may send information for prompting that the train has entered the automatic operation mode to the DMI, so that the information for prompting that the train has entered the automatic operation mode is presented on the display screen of the DMI.

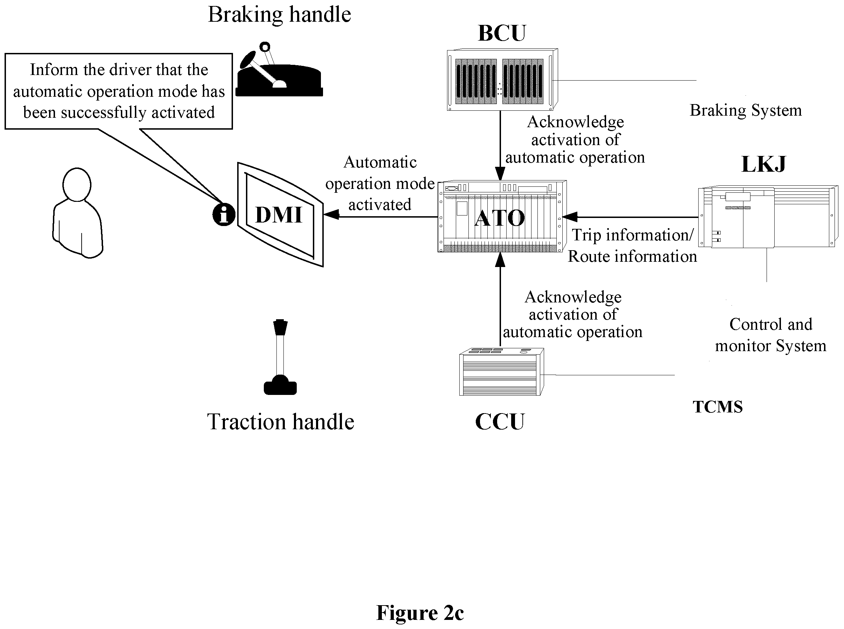

Reference is made to Figure 2c, which is a schematic diagram showing a scenario of feeding back activation of the automatic operation mode. The BCU, after switching the operation mode of the BCU itself to the automatic operation mode, may send a response message for acknowledging activation of automatic operation to the ATO device. Similarly, the CCU, after switching the operation mode of the CCU itself to the automatic operation mode, may send a response message for acknowledging activation of automatic operation to the ATO device. On reception of the response messages for acknowledging activation of automatic operation from the control devices, the ATO device switches the operation mode of the ATO device itself to the automatic operation mode, and sends an instruction for indicating that the automatic operation mode is activated to the DMI, so as to display the information for prompting that the train has entered the automatic operation mode through the display screen of the DMI.

In the above technical solutions, it is determined whether state information of the automatic train operation device indicates that an automatic operation mode is allowed, and whether state information of each of control devices indicates that the automatic operation mode is allowed, where the state information of the automatic train operation device is determined by the automatic train operation device based on an automatic operation condition set for the automatic train operation device, and for each of the control devices, the state information of the control device is determined by the control device based on an automatic operation condition set for the control device; if the state information of the automatic train operation device indicates that the automatic operation mode is allowed, and the state information of each of control devices indicates that the automatic operation mode is allowed, information for prompting activating the automatic operation mode is presented; on reception of an automatic operation activation command meeting a safety rule, an automatic operation activation instruction is sent to each of the control devices; and on reception of response messages from all of the control devices for acknowledging activation of automatic operation, an operation mode of the automatic train operation device is switched to the automatic operation mode. Thus, the operation mode of the train is switched from the manual operation mode to the automatic operation mode. In the technical solution, conditions are set for switching of the operation modes of the automatic train operation device and the control devices. The operation mode of the train can be switched to the automatic operation mode only in a case that the automatic train operation device meets the automatic operation condition and each of the control devices meets the automatic operation condition, thereby improving the reliability and safety when switching the operation mode of the train.

In practices, there may be a case where the ATO device sends the automatic operation activation instruction to each of the control devices, but does not receive the response message from one of the control devices for acknowledging activation of automatic operation. In this case, the train cannot enter the automatic operation mode. A monitoring mechanism may be configured for this case.

Specifically, the automatic train operation device may determine whether the response message from each of the control devices for acknowledging activation of automatic operation is received within a predetermined time period.

The predetermined time period may be configured according to actual requirements, which is not limited herein.

In practice, in order to avoid interferences from failed information transmission caused by factors such as an unstable network, the ATO device may send the automatic operation activation instruction to the control device that do not feedback the response message multiple times at a predetermined time interval. Accordingly, the predetermined time period may be configured to be greater than the predetermined time interval.

If the ATO device does not receive the response message from all of the control devices for acknowledging activation of automatic operation within the predetermined time period, the ATO device stops sending the automatic operation activation instruction to each of the control devices, displays information for prompting failed activation of automatic operation, and returns to step S101.

In the automatic operation mode, each of the control devices still monitors the operation state of the control device itself. For each of the control devices, if the operation state of the control device does not meet the automatic operation condition for the control device, the control device may determine to exit the automatic operation mode. In order to ensure that the devices on the train operate in the same operation mode, the control device that determines to exit the automatic operation mode may send information for prompting exiting the automatic operation mode to the automatic train operation device.

In order to distinguish between different control devices, in an embodiment of the present disclosure, the control device that actively sends the information for prompting exiting the automatic operation mode to the automatic train operation device may be referred to as a target control device, and remaining control devices other than the target control device among the control devices are referred to as other control devices.

On reception of the information for prompting exiting the automatic operation mode from the target control device, the automatic train operation device may present information for prompting that the train exits the automatic operation mode by using the display screen of the DMI, switch the operation mode of the automatic train operation device itself to the manual operation mode, and send an automatic operation exiting instruction to each of the other control devices, to cause each of the other control devices to switch the operation mode of the control device to the manual operation mode.

For example, if the driver operates the braking handle, and the BCU detects that the braking handle is moved away from the operation position, the BCU does not met the automatic operation condition for the BCU. In this case, the BCU may switch the operation mode of the BCU itself to the manual operation mode, and send information for prompting exiting the automatic operation mode to the ATO device, so that the ATO device and the CCU switch respective operation modes to the manual operation mode.

Similar to each of the control devices monitoring the operation state of the control device itself, in the automatic operation mode, the automatic train control device monitors the operation state of the automatic train control device itself. If the automatic train control device detects that the operation state of the automatic train control device itself does not meet the automatic operation condition for the automatic train control device, the automatic train control device presents information for prompting that the train exits the automatic operation mode, switch the operation mode of the automatic train control device itself to the manual operation mode, and send the automatic operation exiting instruction to each of the control devices, to cause each of the control devices to switch the operation mode of the control device to the manual operation mode. In addition, the automatic train control device may present the information for prompting that the train exits the automatic operation mode by using the display screen of the DMI.

For example, if the communication between the ATO device and the LKJ is abnormal and the ATO device cannot plan the driving route correctly, the ATO device is required to switch the operation mode to the manual operation mode. The ATO device may present the information for prompting that the train exits the automatic operation mode by using the display screen of the DMI, switch the operation mode of the ATO device itself to the manual operation mode, and send the automatic operation exiting instruction to the BCU and the CCU, to cause the BCU and the CCU to switch respective operation modes to the manual operation mode.

With the above monitoring mechanism, if any one of the devices on the train exits the automatic operation mode, the ATO device sends the automatic operation exiting instruction to each of the other devices, thereby ensuring that the devices on the train operate in the same operation mode and avoiding safety problems caused by inconsistent operation modes. In addition, the driver can be informed in time that the operation mode of the train has been switched to the manual operation mode via the presented information for prompting that the train exits the automatic operation mode.

The above shows a process of exiting the automatic operation mode in a case that the automatic operation condition for any one of the control devices or the automatic train operation device is not met. In practices, the driver may choose to exit the automatic operation mode via the DMI.

For example, in the automatic operation mode, buttons for exiting the automatic operation mode are provided on the DMI. If the driver determines to switch the operation mode of the train to the manual operation mode, the driver may press an "Exit" button and a "Confirm" button located at determined positions on the DMI in sequence, then the ATO device determines that the received automatic operation exiting command meets a safety rule. If the driver does not press the buttons in a predetermined sequence, the ATO device determines that the driver performs a misoperation and does not exit the automatic operation mode.

Since the control devices and the automatic train operation device may accurately obtain the operation state of the train, the above devices are capable of ensuring that the train exits the automatic operation mode while operating safely. However, in the case that the driver determines to exit the automatic operation condition via the DMI, the driver cannot accurately obtain the operation state of the train. Therefore, in an embodiment of the present disclosure, on reception of the automatic operation exiting command, the automatic train operation device determines whether a current operation state of the train meets a switching condition.

If the current operation state of the train meets the switching condition, the automatic train operation device switches the operation mode of the automatic train operation device itself to the manual operation mode, and sends the automatic operation mode exiting instruction to each of the control devices, to cause each of the control devices to switch the operation mode of the control device to the manual operation mode. In addition, the automatic train operation device presents the information for prompting that the train exits the automatic operation mode by using the display screen of the DMI.

If the current operation state of the train does not meet the switching condition, information for prompting manual takeover is presented. After the operation of the train is taken over by the driver, the operation modes of the devices on the train are switched to the manual operation mode.

The switching condition is a restriction condition for ensuring safety switching of the train.

In practices, there may be a time interval from the devices on the train exiting the automatic operation mode to the driver being in control of the train. If the train is operating in a traction state or an inert operation state, the safety of the train is not affected by the time interval. However, if the train is operating in a braking state, it is required that the devices on the train do not exit the automatic operation mode until the train is taken over by the driver, thereby ensuring the safety of the train in the switching process. That is, if the train is operating in the traction state or the inert operation state, it is determined that the current operation state of the train meets the switching condition; and if the train is operating in the braking state, it is determined that the current operation state of the train does not meet the switching condition.

For example, in the automatic operation mode, on reception of the automatic operation exiting command from the DMI, the ATO device performs a logical calculation based on the operation state of the train. If the train is operating in the traction state or the inert operation state, the ATO device switches the operation mode of the ATO device itself to the manual operation mode and sends the automatic operation mode exiting instruction to the BCU and the CCU. If the train is operating in the braking state, the ATO device maintains the current braking state of the train, does not switch the operation mode of the train, and sends prompt information for requesting manual takeover to the DMI, so that the DMI presents the information for prompting manual takeover on the display screen.

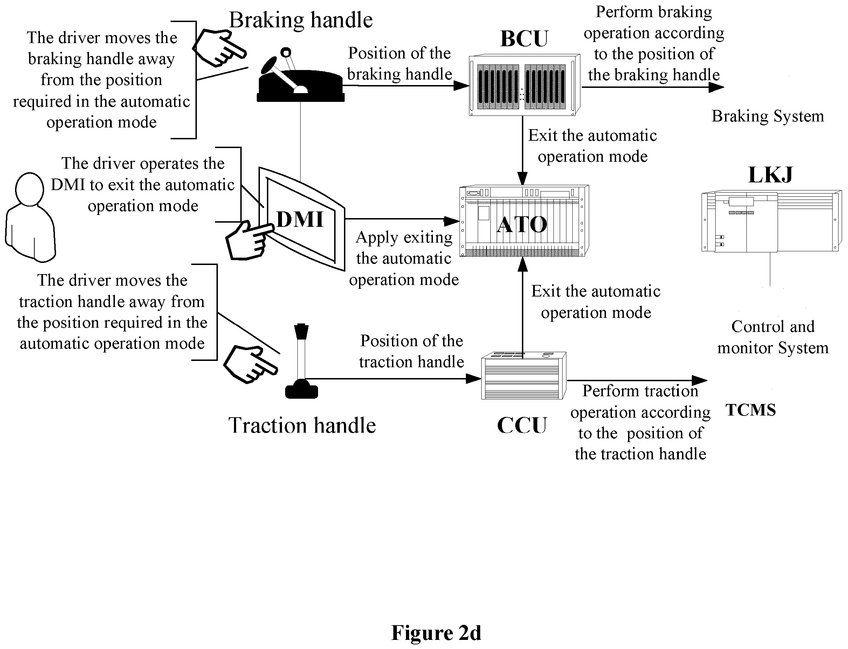

Reference is made to Figure 2d, which is a schematic diagram showing a scenario of exiting the automatic operation mode. The driver may control the train to exit the automatic operation mode in three manners. In a first manner, the driver operates the DMI, which provides buttons for exiting the automatic driving mode, and the driver presses an "Exit" button and a "Confirm" button located at determined positions in sequence to trigger the DMI to send the automatic operation exiting command to the ATO device. In a second manner, the driver operates the braking handle to move the braking handle away from the position required in the automatic operation mode, that is, the operation position. After detecting that the braking handle is moved away from the operation position, the BCU may switch the operation mode of the BCU itself to the manual operation mode, and send the information for prompting exiting the automatic operation mode to the ATO device, to cause the ATO device to switch the operation mode of the ATO device itself to the manual operation mode and send the automatic operation mode exiting instruction to the CCU, thereby ensuring that the ATO device, the CCU and the BCU operate in the same operation mode, and ensuring the safety operation of the train. In a third manner, the driver operates the traction handle to move the traction handle away from the position required in the automatic operation mode. After detecting that the traction handle is moved away from the position required in the automatic operation mode, the CCU may switch the operation mode of the CCU itself to the manual operation mode, and send the information for prompting exiting the automatic operation mode to the ATO device, to cause the ATO device switches the operation mode of the ATO device itself to the manual operation mode and send the automatic operation mode exiting instruction to the BCU, thereby ensuring that the ATO device, the CCU and the BCU operate in the same operation mode, and ensuring the safety operation of the train.

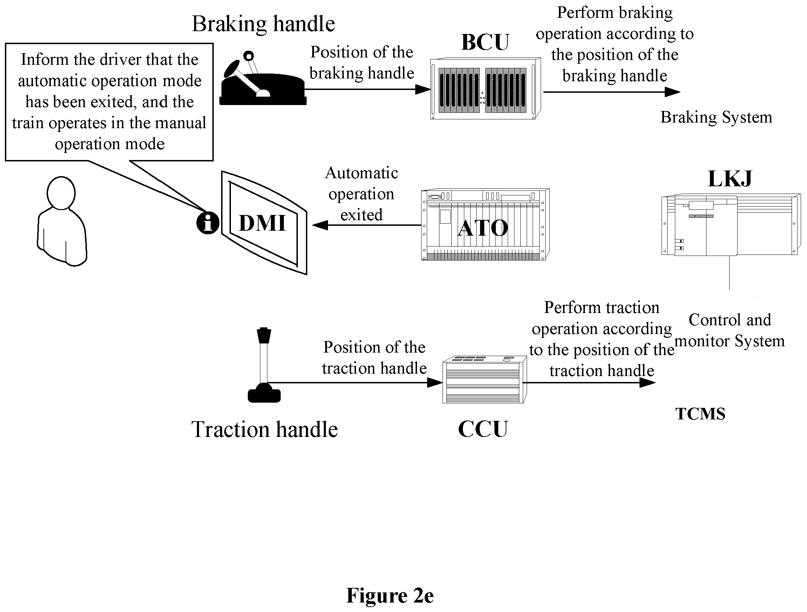

Reference is made to Figure 2e, which is a schematic diagram showing a scenario of feeding back that the automatic operation mode is exited. After the train exits the automatic operation mode, in order that the driver is informed in time that the train has exited the automatic operation mode, the ATO device may send an instruction to the DMI for prompting the DMI that the automatic operation mode has been exited, to cause the DMI to present the information for prompting that the train exits the automatic operation mode on the display screen. After the train exits the automatic operation mode, it is unnecessary for the ATO device to manage the devices on the train, that is, the communicational connection between the BCU, the CCU, the LKJ and the ATO device may be disconnected.

In the embodiments of the present disclosure, under the management of the ATO device, if any one of the ATO device, the BCU and the CCU on the train exits the automatic operation mode or the driver chooses to exit the automatic operation mode, the ATO device causes each of the devices to exit the automatic operation mode, effectively ensuring that the devices operate in the same operation mode, and ensuring the safety and stability of the operation of the train.

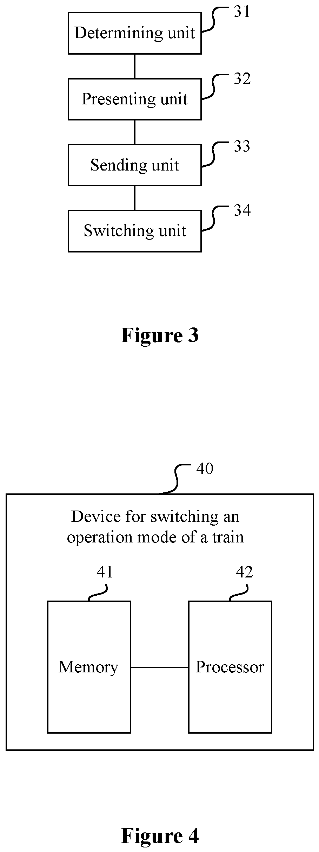

Figure 3 is a schematic structural diagram of an apparatus for switching an operation mode of a train according to an embodiment of the present disclosure. The apparatus is applied to an automatic train operation device on the train. The apparatus includes: a determining unit 31, a presenting unit 32, a sending unit 33, and a switching unit 34.

The determining unit 31 configured to determine whether state information of the automatic train operation device indicates that an automatic operation mode is allowed, and whether state information of each of control devices indicates that the automatic operation mode is allowed. The state information of the automatic train operation device is determined by the automatic train operation device based on an automatic operation condition set for the automatic train operation device. For each of the control devices, the state information of the control device is determined by the control device based on an automatic operation condition set for the control device.

The presenting unit 32 is configured to present, if the state information of the automatic train operation device indicates that the automatic operation mode is allowed, and the state information of each of control devices indicates that the automatic operation mode is allowed, information for prompting activating the automatic operation mode.

The sending unit 33 is configured to send, on reception of an automatic operation activation command meeting a safety rule, an automatic operation activation instruction to each of the control devices.

The switching unit 34 is configured to switch, on reception of response messages from all of the control devices for acknowledging activation of automatic operation, an operation mode of the automatic train operation device to the automatic operation mode.

In an embodiment, the presenting unit is further configured to, after the operation mode of the automatic train operation device is switched to the automatic operation mode, present information for prompting that the train has entered the automatic operation mode.

In an embodiment, the apparatus further includes message determining unit and a prompting unit.

The message determining unit is configured to determine, after the automatic operation activation instruction is sent to each of the control devices, whether the response messages from all of the control devices for acknowledging activation of automatic operation are received within a predetermined time period, and trigger the prompting unit if not all of the response messages from the control devices are received within the predetermined time period.

The prompting unit is configured to stop sending the automatic operation activation instruction to each of the control devices, present information for prompting failed activation of automatic operation, and trigger the determining unit.

In an embodiment, the presenting unit is configured to, on reception of information for prompting exiting the automatic operation mode from a target control device, present information for prompting that the train exits the automatic operation mode, where the operation mode of the automatic train operation device is switched to a manual operation mode, and trigger the sending unit to send an automatic operation mode exiting instruction to each of other control devices, to cause each of the other control devices to switch the operation mode of the control device to the manual operation mode.

The target control device is any one of the control devices, and the other control devices are remaining control devices other than the target control device among the control devices.

In an embodiment, the switching unit is further configured to, if it is detected that the state information of the automatic train operation device indicates that the automatic operation mode is not allowed, switch the operation mode of the automatic train operation device to a manual operation mode, and trigger the sending unit to send an automatic operation mode exiting instruction to each of the control devices, to cause each of the control devices to switch the operation mode of the control device to the manual operation mode.

In an embodiment, the determining unit is further configured to determine, on reception of an automatic operation exiting command, whether a current operation state of the train meets a switching condition.

The switching unit is further configured to switch the operation mode of the automatic train operation device to a manual operation mode and trigger the sending unit to send an automatic operation mode exiting instruction to each of the control devices if the current operation state of the train meets the switching condition, to cause each of the control devices to switch the operation mode of the control device to the manual operation mode.

The presenting unit is further configured to present, if the current operation state of the train does not meet the switching condition, information for prompting manual takeover.

For detailed description of the embodiments shown in Figure 3, one may refer to the description of the embodiments shown in Figure 1, which is not repeated here.

In the above technical solutions, it is determined whether state information of the automatic train operation device indicates that an automatic operation mode is allowed, and whether state information of each of control devices indicates that the automatic operation mode is allowed, where the state information of the automatic train operation device is determined by the automatic train operation device based on an automatic operation condition set for the automatic train operation device, and for each of the control devices, the state information of the control device is determined by the control device based on an automatic operation condition set for the control device; if the state information of the automatic train operation device indicates that the automatic operation mode is allowed, and the state information of each of control devices indicates that the automatic operation mode is allowed, information for prompting activating the automatic operation mode is presented; on reception of an automatic operation activation command meeting a safety rule, an automatic operation activation instruction is sent to each of the control devices; and on reception of response messages from all of the control devices for acknowledging activation of automatic operation, an operation mode of the automatic train operation device is switched to the automatic operation mode. Thus, the operation mode of the train is switched from the manual operation mode to the automatic operation mode. In the technical solution, conditions are set for switching of the operation modes of the automatic train operation device and the control devices. The operation mode of the train can be switched to the automatic operation mode only in a case that the automatic train operation device meets the automatic operation condition and each of the control devices meets the automatic operation condition, thereby improving the reliability and safety when switching the operation mode of the train.

Figure 4 is a schematic diagram of a hardware configuration of a device 40 for switching an operation mode of a train according to an embodiment of the present disclosure. The device 40 includes: a memory 41 and a processor 42.

The memory 41 stores a computer program.

The processor 42 is configured to execute the computer program to perform the method for switching an operation mode of a train.

A computer readable storage medium storing a computer program is further provided according to an embodiment of the present disclosure. The computer program, when executed by a processor, performs steps of the method for switching an operation mode of a train.

In the above, a method and an apparatus for switching an operation mode of a train, and a computer readable storage medium according to the embodiments of the present disclosure are described in details. The embodiments in this specification are described in a progressive way, each of which emphasizes the differences from others, and the same or similar parts among the embodiments can be referred to each other. Since the apparatus disclosed in the embodiments corresponds to the method therein, the description thereof is relatively simple, and for relevant matters references may be made to the description of the method.

It may be known by those skilled in the art that, units and steps in each example described in conjunction with the embodiments disclosed herein can be realized by electronic hardware, computer software or a combination thereof. In order to clearly illustrate interchangeability of the hardware and the software, steps and composition of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the invention as defined by the appended claims.

The steps of the methods or algorithms described in conjunction with the embodiments of the present disclosure can be implemented with hardware, software modules executed by a processor, or a combination thereof. The software modules may reside in a Random Access Memory (RAM), an internal memory, a Read Only Memory (ROM), an Electrically Programmable ROM, an Electrically-Erasable Programmable ROM, a register, a hard disk, a removable disk drive, CD-ROM, or other types of storage media well known in the technical field.

## Claims

1. A method for switching an operation mode of a train, applied to an automatic train operation device on the train, wherein the method comprises:
determining whether state information of the automatic train operation device indicates that an automatic operation mode is allowed, and whether state information of each of control devices indicates that the automatic operation mode is allowed, wherein
the state information of the automatic train operation device is determined by the automatic train operation device based on an automatic operation condition set for the automatic train operation device,
for each of the control devices, the state information of the control device is determined by the control device based on an automatic operation condition set for the control device, and is sent to the automatic train operation device, and
the state information indicates an operation mode that the control device or the automatic train operation device is allowed to enter;
presenting, if the state information of the automatic train operation device indicates that the automatic operation mode is allowed, and the state information of each of control devices indicates that the automatic operation mode is allowed, information for prompting activating the automatic operation mode;
sending, on reception of an automatic operation activation command meeting a safety rule, an automatic operation activation instruction to each of the control devices; and
switching, on reception of response messages from all of the control devices for acknowledging activation of automatic operation, an operation mode of the automatic train operation device to the automatic operation mode.

2. The method according to claim 1, wherein after switching the operation mode of the automatic train operation device to the automatic operation mode, the method further comprises:
presenting information for prompting that the train has entered the automatic operation mode.

3. The method according to claim 1, wherein after sending the automatic operation activation instruction to each of the control devices, the method further comprises:
determining whether the response messages from all of the control devices for acknowledging activation of automatic operation are received within a predetermined time period; and
stopping sending the automatic operation activation instruction to each of the control devices, presenting information for prompting failed activation of automatic operation, and returning to the step of determining whether state information of the automatic train operation device indicates that an automatic operation mode is allowed, and whether state information of each of control devices indicates that the automatic operation mode is allowed, if not all of the response messages from the control device for acknowledging activation of automatic operation is received within the predetermined time period.

4. The method according to claim 1, wherein after sending the automatic operation activation instruction to each of the control devices, the method further comprises:
on reception of information for prompting exiting the automatic operation mode from a target control device, presenting information for prompting that the train exits the automatic operation mode, switching the operation mode of the automatic train operation device to a manual operation mode, and sending an automatic operation mode exiting instruction to each of other control devices, to cause each of the other control devices to switch the operation mode of the control device to the manual operation mode, wherein the target control device is any one of the control devices, and the other control devices are remaining control devices other than the target control device among the control devices.

5. The method according to claim 1, wherein after switching the operation mode of the automatic train operation device to the automatic operation mode, the method further comprises:
if it is detected that the state information of the automatic train operation device indicates that the automatic operation mode is not allowed, presenting information for prompting that the automatic operation mode is exited, switching the operation mode of the automatic train operation device to a manual operation mode, and sending an automatic operation mode exiting instruction to each of the control devices, to cause each of the control devices to switch the operation mode of the control device to the manual operation mode.

6. The method according to any one of claims 1 to 5, wherein after sending the automatic operation activation instruction to each of the control devices and switching the operation mode of the automatic train operation device to the automatic operation mode, the method further comprises:
determining, on reception of an automatic operation exiting command, whether a current operation state of the train meets a switching condition;
switching the operation mode of the automatic train operation device to a manual operation mode and sending an automatic operation mode exiting instruction to each of the control devices if the current operation state of the train meets the switching condition, to cause each of the control devices to switch the operation mode of the control device to the manual operation mode; and
presenting, if the current operation state of the train does not meet the switching condition, information for prompting manual takeover.

7. An apparatus for switching an operation mode of a train, wherein the apparatus is applied to an automatic train operation device on the train, and the apparatus comprises:
a determining unit configured to determine whether state information of the automatic train operation device indicates that an automatic operation mode is allowed, and whether state information of each of control devices indicates that the automatic operation mode is allowed, wherein
the state information of the automatic train operation device is determined by the automatic train operation device based on an automatic operation condition set for the automatic train operation device,
for each of the control devices, the state information of the control device is determined by the control device based on an automatic operation condition set for the control device, and is sent to the automatic train operation device,
the state information indicates an operation mode that the control device or the automatic train operation device is allowed to enter;
a presenting unit configured to present, if the state information of the automatic train operation device indicates that the automatic operation mode is allowed, and the state information of each of control devices indicates that the automatic operation mode is allowed, information for prompting activating the automatic operation mode;
a sending unit configured to send, on reception of an automatic operation activation command meeting a safety rule, an automatic operation activation instruction to each of the control devices; and
a switching unit configured to switch, on reception of response messages from all of the control devices for acknowledging activation of automatic operation, an operation mode of the automatic train operation device to the automatic operation mode.

8. The apparatus according to claim 7, wherein the presenting unit is further configured to, after the operation mode of the automatic train operation device is switched to the automatic operation mode, present information for prompting that the train has entered the automatic operation mode.

9. A device for switching an operation mode of a train, comprising:
a memory, for storing a computer program;
a processor, configured to execute the computer program to perform the method for switching an operation mode of a train according to any one of claims 1 to 6.

10. A computer readable storage medium storing a computer program, wherein the computer program, when executed by a processor, performs the method for switching an operation mode of a train according to any one of claims 1 to 6.

## Patentansprüche

1. Verfahren zum Umschalten eines Betriebsmodus von einem Zug, das bei einer automatischen Zugbetriebseinrichtung in dem Zug Anwendung findet, wobei das Verfahren umfasst:
Bestimmen, ob eine Statusinformation der automatischen Zugbetriebseinrichtung anzeigt, dass ein automatischer Betriebsmodus erlaubt ist, und ob eine Statusinformation von jeweiligen Steuereinrichtungen anzeigt, dass der automatische Betriebsmodus erlaubt ist, wobei
die Statusinformation der automatischen Zugbetriebseinrichtung durch die automatische Zugbetriebseinrichtung auf der Grundlage einer für die automatische Zugbetriebseinrichtung festgelegten Automatikbetriebsbedingung bestimmt wird,
für jede der Steuereinrichtungen die Statusinformation der Steuereinrichtung durch die Steuereinrichtung auf der Grundlage einer für die Steuereinrichtung festgelegten Automatikbetriebsbedingung bestimmt und an die automatische Zugbetriebseinrichtung gesendet wird, und
die Statusinformation einen Betriebsmodus anzeigt, in den die Steuereinrichtung oder die automatische Zugbetriebseinrichtung eintreten darf;
wenn die Statusinformation der automatischen Zugbetriebseinrichtung anzeigt, dass der automatische Betriebsmodus erlaubt ist, und die Statusinformation jeder der Steuereinrichtungen anzeigt, dass der automatische Betriebsmodus erlaubt ist, Darstellen einer Information zur Aufforderung, den automatischen Betriebsmodus zu aktivieren;
bei Empfang eines Befehls zur Aktivierung des automatischen Betriebs, der eine Sicherheitsregel erfüllt, Senden einer Anweisung zur Aktivierung des automatischen Betriebs an jede der Steuereinrichtungen; und
bei Empfang von Antwortmeldungen von allen Steuereinrichtungen zur Bestätigung der Aktivierung des automatischen Betriebs, Umschalten eines Betriebsmodus der automatischen Zugbetriebseinrichtung auf den automatischen Betriebsmodus.

2. Verfahren nach Anspruch 1, wobei das Verfahren nach dem Umschalten des Betriebsmodus der automatischen Zugbetriebseinrichtung auf den automatischen Betriebsmodus ferner umfasst:
Darstellen einer Information zur Aufforderung, wonach der Zug in den automatischen Betriebsmodus eingetreten ist.

3. Verfahren nach Anspruch 1, wobei das Verfahren nach dem Senden der Anweisung zur Aktivierung des automatischen Betriebs an jede der Steuereinrichtungen ferner umfasst:
Bestimmen, ob die Antwortmeldungen von allen Steuereinrichtungen zur Bestätigung der Aktivierung des automatischen Betriebs innerhalb einer vorbestimmten Zeitspanne empfangen werden; und
Beenden des Sendens der Anweisung zur Aktivierung des automatischen Betriebs an jede der Steuereinrichtungen, Darstellen einer Information über die fehlgeschlagene Aufforderung einer Aktivierung des automatischen Betriebs und Zurückkehren zu dem Schritt des Bestimmens, ob die Statusinformation der automatischen Zugbetriebseinrichtung anzeigt, dass ein automatischer Betriebsmodus erlaubt ist, und ob die Statusinformation jeder der Steuereinrichtungen anzeigt, dass der automatische Betriebsmodus erlaubt ist, wenn nicht alle der Antwortmeldungen von der Steuereinrichtung zur Bestätigung der Aktivierung des automatischen Betriebs innerhalb der vorbestimmten Zeitspanne empfangen werden.

4. Verfahren nach Anspruch 1, wobei das Verfahren nach dem Senden der Anweisung zur Aktivierung des automatischen Betriebs an jede der Steuereinrichtungen ferner umfasst:
bei Empfang einer Information zur Aufforderung zum Verlassen des automatischen Betriebsmodus von einer Zielsteuereinrichtung, Darstellen einer Information zur Aufforderung, dass der Zug den automatischen Betriebsmodus verlässt, Umschalten des Betriebsmodus der automatischen Zugbetriebseinrichtung auf einen manuellen Betriebsmodus und Senden einer Anweisung zum Verlassen des automatischen Betriebsmodus an jede der weiteren Steuereinrichtungen, um zu bewirken, dass jede der weiteren Steuereinrichtungen den Betriebsmodus der Steuereinrichtung auf den manuellen Betriebsmodus umschaltet, wobei die Zielsteuereinrichtung eine beliebige der Steuereinrichtungen ist und die weiteren Steuereinrichtungen andere Steuereinrichtungen als die Zielsteuereinrichtung unter den Steuereinrichtungen sind.

5. Verfahren nach Anspruch 1, wobei das Verfahren nach dem Umschalten des Betriebsmodus der automatischen Zugbetriebseinrichtung auf den automatischen Betriebsmodus ferner umfasst:
wenn erkannt wird, dass die Statusinformation der automatischen Zugbetriebseinrichtung anzeigt, dass der automatische Betriebsmodus nicht erlaubt ist, Darstellen einer Information zur Aufforderung, dass der automatische Betriebsmodus verlassen wird, Umschalten des Betriebsmodus der automatischen Zugbetriebseinrichtung auf einen manuellen Betriebsmodus und Senden einer Anweisung zum Verlassen des automatischen Betriebsmodus an jede der Steuereinrichtungen, um zu bewirken, dass jede der Steuereinrichtungen den Betriebsmodus der Steuereinrichtung auf den manuellen Betriebsmodus umschaltet.

6. Verfahren nach einem der Ansprüche 1 bis 5, wobei das Verfahren nach dem Senden der Anweisung zur Aktivierung des automatischen Betriebs an jede der Steuereinrichtungen und dem Umschalten des Betriebsmodus der automatischen Zugbetriebseinrichtung auf den automatischen Betriebsmodus ferner umfasst:
bei Empfang eines Befehls zum Verlassen des automatischen Betriebs Bestimmen, ob ein aktueller Betriebsstatus des Zuges eine Umschaltbedingung erfüllt;
Umschalten des Betriebsmodus der automatischen Zugbetriebseinrichtung auf einen manuellen Betriebsmodus und Senden einer Anweisung zum Verlassen des automatischen Betriebsmodus an jede der Steuereinrichtungen, wenn der aktuelle Betriebsstatus des Zuges die Umschaltbedingung erfüllt, um zu bewirken, dass jede der Steuereinrichtungen den Betriebsmodus der Steuereinrichtung auf den manuellen Betriebsmodus umschaltet; und
wenn der aktuelle Betriebsstatus des Zuges die Umschaltbedingung nicht erfüllt, Darstellen einer Information zur Aufforderung zur manuellen Übernahme.

7. Einrichtung zum Umschalten eines Betriebsmodus von einem Zug, wobei die Einrichtung bei einer automatischen Zugbetriebseinrichtung in dem Zug Anwendung findet und die Einrichtung umfasst:
eine Bestimmungseinheit, die dazu ausgelegt ist, zu bestimmen, ob eine Statusinformation der automatischen Zugbetriebseinrichtung anzeigt, dass ein automatischer Betriebsmodus erlaubt ist, und ob eine Statusinformation von jeweiligen Steuereinrichtungen anzeigt, dass der automatische Betriebsmodus erlaubt ist, wobei
die Statusinformation der automatischen Zugbetriebseinrichtung durch die automatische Zugbetriebseinrichtung auf der Grundlage einer für die automatische Zugbetriebseinrichtung festgelegten Automatikbetriebsbedingung bestimmt wird,
für jede der Steuereinrichtungen die Stationsinformation der Steuereinrichtung von der Steuereinrichtung auf der Grundlage einer für die Steuereinrichtung festgelegten Automatikbetriebsbedingung bestimmt und an die automatische Zugbetriebseinrichtung gesendet wird,
die Statusinformation einen Betriebsmodus anzeigt, in den die Steuereinrichtung oder die automatische Zugbetriebseinrichtung eintreten darf;
eine Darstellungseinheit, die dazu ausgelegt ist, dann, wenn die Statusinformation der automatischen Zugbetriebseinrichtung anzeigt, dass der automatische Betriebsmodus erlaubt ist, und die Statusinformation jeder der Steuereinrichtungen anzeigt, dass der automatische Betriebsmodus erlaubt ist, eine Information zur Aufforderung zur Aktivierung des automatischen Betriebsmodus darzustellen;
eine Sendeeinheit, die dazu ausgelegt ist, bei Empfang eines Befehls zur Aktivierung des automatischen Betriebs, der eine Sicherheitsregel erfüllt, eine Anweisung zur Aktivierung des automatischen Betriebs an jede der Steuereinrichtungen zu senden; und
eine Umschalteinheit, die dazu ausgelegt ist, bei Empfang von Antwortmeldungen von allen Steuereinrichtungen zur Bestätigung der Aktivierung des automatischen Betriebs einen Betriebsmodus der automatischen Zugbetriebseinrichtung auf den automatischen Betriebsmodus umzuschalten.

8. Einrichtung nach Anspruch 7, wobei die Darstellungseinheit ferner dazu ausgelegt ist, nach dem Umschalten des Betriebsmodus der automatischen Zugbetriebseinrichtung auf den automatischen Betriebsmodus eine Information zur Aufforderung, wonach der Zug in den automatischen Betriebsmodus eingetreten ist, darzustellen.

9. Einrichtung zum Umschalten eines Betriebsmodus von einem Zug, umfassend:
einen Speicher zum Abspeichern eines Computerprogramms;
einen Prozessor, der dazu ausgelegt ist, das Computerprogramm auszuführen, um das Verfahren zum Umschalten eines Betriebsmodus von einem Zug nach einem der Ansprüche 1 bis 6 durchzuführen.

10. Computerlesbares Speichermedium, das ein Computerprogramm abspeichert, wobei das Computerprogramm, wenn es von einem Prozessor ausgeführt wird, das Verfahren zum Umschalten eines Betriebsmodus von einem Zug nach einem der Ansprüche 1 bis 6 durchführt.

## Revendications

1. Procédé de commutation d'un mode de fonctionnement d'un train, appliqué à un dispositif d'exploitation automatique de train sur le train, dans lequel le procédé comprend :
la détermination si des informations d'état du dispositif d'exploitation automatique de train indiquent qu'un mode de fonctionnement automatique est autorisé, et si des informations d'état de chacun des dispositifs de commande indiquent que le mode de fonctionnement automatique est autorisé, dans lequel
les informations d'état du dispositif d'exploitation automatique de train sont déterminées par le dispositif d'exploitation automatique de train sur la base d'une condition de fonctionnement automatique définie pour le dispositif d'exploitation automatique de train,
pour chacun des dispositifs de commande, les informations d'état du dispositif de commande sont déterminées par le dispositif de commande sur la base d'une condition de fonctionnement automatique définie pour le dispositif de commande et sont envoyées au dispositif d'exploitation automatique de train ; et
les informations d'état indiquent un mode de fonctionnement dans lequel le dispositif de commande ou le dispositif d'exploitation de train automatique est autorisé à entrer ;
la présentation, si les informations d'état du dispositif d'exploitation automatique de train indiquent que le mode de fonctionnement automatique est autorisé et si les informations d'état de chacun des dispositifs de commande indiquent que le mode de fonctionnement automatique est autorisé, d'informations pour signaler l'activation du mode de fonctionnement automatique ;
l'envoi, à réception d'une commande d'activation de fonctionnement automatique répondant à une règle de sécurité, d'une instruction d'activation de fonctionnement automatique à chacun des dispositifs de commande ; et
la commutation, à réception de messages de réponse de tous les dispositifs de commande pour accuser réception de l'activation du fonctionnement automatique, d'un mode de fonctionnement du dispositif d'exploitation automatique de train sur le mode de fonctionnement automatique.

2. Procédé selon la revendication 1, dans lequel après la commutation du mode de fonctionnement du dispositif d'exploitation automatique de train sur le mode de fonctionnement automatique, le procédé comprend en outre :
la présentation d'informations pour signaler que le train est entré en mode de fonctionnement automatique.

3. Procédé selon la revendication 1, dans lequel après l'envoi de l'instruction d'activation de fonctionnement automatique à chacun des dispositifs de commande, le procédé comprend en outre :
le fait de déterminer si les messages de réponse de la totalité des dispositifs de commande pour accuser réception de l'activation du fonctionnement automatique sont reçus dans un délai prédéterminé ; et
l'arrêt de l'envoi de l'instruction d'activation de fonctionnement automatique à chacun des dispositifs de commande, la présentation d'informations pour signaler l'échec de l'activation du fonctionnement automatique, et le retour à l'étape de détermination pour savoir si des informations d'état du dispositif d'exploitation automatique de train indiquent qu'un mode de fonctionnement automatique est autorisé, et si des informations d'état de chacun des dispositifs de commande indiquent que le mode de fonctionnement automatique est autorisé, si tous les messages de réponse provenant du dispositif de commande pour accuser réception de l'activation du fonctionnement automatique ne sont pas reçus dans le délai prédéterminé.

4. Procédé selon la revendication 1, dans lequel après l'envoi de l'instruction d'activation de fonctionnement automatique à chacun des dispositifs de commande, le procédé comprend en outre :
à réception d'informations pour signaler la sortie du mode de fonctionnement automatique d'un dispositif de commande cible, la présentation d'informations pour signaler la sortie par le train du mode de fonctionnement automatique, la commutation du mode de fonctionnement du dispositif d'exploitation automatique de train sur un mode de fonctionnement manuel, et l'envoi d'une instruction de sortie de mode de fonctionnement automatique à chacun des autres dispositifs de commande, pour amener chacun des autres dispositifs de commande à commuter le mode de fonctionnement du dispositif de commande sur le mode de fonctionnement manuel, dans lequel le dispositif de commande cible est l'un quelconque des dispositifs de commande, et les autres dispositifs de commande sont des dispositifs de commande restants autres que le dispositif de commande cible parmi les dispositifs de commande.

5. Procédé selon la revendication 1, dans lequel, après avoir commuté le mode de fonctionnement du dispositif d'exploitation automatique de train sur le mode de fonctionnement automatique, le procédé comprend en outre :
s'il est détecté que les informations d'état du dispositif d'exploitation automatique de train indiquent que le mode de fonctionnement automatique n'est pas autorisé, la présentation d'informations pour signaler la sortie du mode de fonctionnement automatique, la commutation du mode de fonctionnement du dispositif d'exploitation automatique de train sur un mode de fonctionnement manuel, et l'envoi d'une instruction de sortie de mode de fonctionnement automatique à chacun des dispositifs de commande, pour amener chacun des dispositifs de commande à commuter le mode de fonctionnement du dispositif de commande sur le mode de fonctionnement manuel.

6. Procédé selon l'une quelconque des revendications 1 à 5, dans lequel, après l'envoi de l'instruction d'activation de fonctionnement automatique à chacun des dispositifs de commande et la commutation du mode de fonctionnement du dispositif d'exploitation automatique de train sur le mode de fonctionnement automatique, le procédé comprend en outre :
le fait de déterminer, à réception d'une commande de sortie de fonctionnement automatique, si un état de fonctionnement actuel du train répond à une condition de commutation ;
la commutation du mode de fonctionnement du dispositif d'exploitation automatique de train sur un mode de fonctionnement manuel et l'envoi d'une instruction de sortie de mode de fonctionnement automatique à chacun des dispositifs de commande si l'état de fonctionnement actuel du train répond à la condition de commutation, pour amener chacun des dispositifs de commande à commuter le mode de fonctionnement du dispositif de commande sur le mode de fonctionnement manuel ; et
la présentation, si l'état de fonctionnement actuel du train ne répond pas à la condition de commutation, d'informations permettant de déclencher une prise de contrôle manuelle.

7. Appareil permettant de commuter un mode de fonctionnement d'un train, dans lequel l'appareil est appliqué à un dispositif d'exploitation automatique de train, et l'appareil comprend :
une unité de détermination configurée pour déterminer si des informations d'état du dispositif d'exploitation automatique de train indiquent qu'un mode de fonctionnement automatique est autorisé, et si des informations d'état de chacun des dispositifs de commande indiquent que le mode de fonctionnement automatique est autorisé, dans lequel
les informations d'état du dispositif d'exploitation automatique de train sont déterminées par le dispositif d'exploitation automatique de train sur la base d'une condition de fonctionnement automatique définie pour le dispositif d'exploitation automatique de train,
pour chacun des dispositifs de commande, les informations d'état du dispositif de commande sont déterminées par le dispositif de commande sur la base d'une condition de fonctionnement automatique définie pour le dispositif de commande et sont envoyées au dispositif d'exploitation de train automatique ;
les informations d'état indiquent un mode de fonctionnement dans lequel le dispositif de commande ou le dispositif d'exploitation de train automatique est autorisé à entrer ,
une unité de présentation configurée pour présenter, si les informations d'état du dispositif d'exploitation automatique de train indiquent que le mode de fonctionnement automatique est autorisé et si les informations d'état de chacun des dispositifs de commande indiquent que le mode de fonctionnement automatique est autorisé, des informations pour signaler l'activation du mode de fonctionnement automatique ;
une unité d'envoi configurée pour envoyer, à réception d'une commande d'activation de fonctionnement automatique répondant à une règle de sécurité, une instruction d'activation de fonctionnement automatique à chacun des dispositifs de commande ; et
une unité de commutation configurée pour commuter, à réception de messages de réponse de la totalité des dispositifs de commande pour accuser réception de l'activation du fonctionnement automatique, un mode de fonctionnement du dispositif d'exploitation automatique de train sur le mode de fonctionnement automatique.

8. Appareil selon la revendication 7, dans lequel l'unité de présentation est en outre configurée pour, après que le mode de fonctionnement du dispositif d'exploitation automatique de train est commuté sur le mode de fonctionnement automatique, présenter des informations pour signaler que le train est entré dans le mode de fonctionnement automatique.

9. Dispositif de commutation d'un mode de fonctionnement d'un train, comprenant :
une mémoire, pour stocker un programme informatique ;
un processeur, configuré pour exécuter le programme informatique pour mettre en œuvre le procédé de commutation d'un mode de fonctionnement d'un train selon l'une quelconque des revendications 1 à 6.

10. Support de stockage lisible par ordinateur stockant un programme informatique, dans lequel le programme informatique, lorsqu'il est exécuté par un processeur, met en œuvre le procédé de commutation d'un mode de fonctionnement d'un train selon l'une quelconque des revendications 1 à 6.
